# FASCICULE DE BREVET EUROPEEN

(11) **EP 3 392 768 B1**
(45) Date de publication et mention de la délivrance du brevet: **22.03.2023**
(21) Numéro de dépôt: 18167647.9
(22) Date de dépôt: 17.04.2018
(51) Int. Cl.: G06F 9/50

(54) **PROCÉDÉ ET DISPOSITIF ÉLECTRONIQUE DE VÉRIFICATION D'UNE CONFIGURATION DE PARTITIONNEMENT, PROGRAMME D'ORDINATEUR ASSOCIÉ**
VERFAHREN UND ELEKTRONISCHE VORRICHTUNG ZUR ÜBERPRÜFUNG EINER PARTITIONIERUNGSKONFIGURATION, UND ENTSPRECHENDES COMPUTERPROGRAMM
METHOD AND ELECTRONIC DEVICE FOR VERIFYING A PARTITIONING CONFIGURATION, ASSOCIATED COMPUTER PROGRAM

(30) Priorité: 18.04.2017 FR 1700423
(43) Date de publication de la demande: 24.10.2018
(73) Titulaire: THALES, 92400 Courbevoie (FR)
(72) Inventeur: FUMEY, Marc, 31036 Toulouse Cedex 1 (FR); TEMPLIER, Michael, 31036 Toulouse Cedex 1 (FR); MANGION, Christophe, 31036 Toulouse Cedex 1 (FR)
(74) Mandataire: Lavoix

(56) Documents cités:
- US-A1- 2009 070 769
- US-A1- 2009 235 044
- US-A1- 2011 154 349
- US-B1- 7 814 492

## Description

L'invention concerne un procédé de vérification d'une configuration de partitionnement, entre une pluralité d'éléments consommateurs, d'au moins une ressource d'un module électronique d'un système avionique. L'invention concerne, également, un programme d'ordinateur associé. L'invention concerne aussi un dispositif électronique de vérification associé.

Les fonctions avioniques remplissant différentes fonctions pour l'accomplissement d'un vol sont généralement installées sur différentes plateformes et utilisent les ressources desdites plateformes. De telles fonctions étant critiques, comme par exemple le système de freinage ou le système de gestion du vol, la configuration des plateformes, ainsi que les processus d'intégration des fonctions sur les plateformes répondent à des contraintes strictes.

Pour cela, des architectures IMA (abrégé de l'anglais « *Integrated Modular Avionics* », traduit en français par « *Avionique modulaire intégrée* ») intégrant des techniques de partitionnement ont été développées. De telles architectures visent à intégrer différentes fonctions avioniques sur un ou plusieurs modules, tout en assurant que chaque fonction avionique ne puisse pas affecter une autre fonction de manière non contrôlée.

Le partitionnement est une technique d'isolement (ou de ségrégation) visant à rendre l'utilisation de composants, utilisés par différentes applications, indépendante d'une application à l'autre, afin de réduire les interférences entre ces applications et d'en contrôler les interactions. Le partitionnement au sein d'une architecture IMA permet à des applications indépendantes de partager les mêmes composants ou ressources sans que lesdites applications aient entre elles des interactions non contrôlées.

Certaines approches IMA suivent un processus de certification incrémentale destiné à faciliter les activités d'intégration et à permettre une indépendance industrielle entre les différentes applications.

Cependant, de tels processus de certification incrémentale s'avèrent relativement lourds à mettre en oeuvre.

L'introduction des notions de partitions, de budgets de ressource associés aux partitions, de séparation des éléments de chacune des partitions dans des fichiers de définition de la configuration du module, permet de simplifier la démonstration du partitionnement, mais la garantie du partitionnement repose malgré tout sur de nombreuses règles à respecter et à vérifier pour l'intégration des différentes applications.

De plus, pour que le partitionnement soit démontré, un tel processus impose de justifier l'exhaustivité des règles pour le partitionnement. En outre, pour que le partitionnement soit effectivement garanti, l'ensemble des règles de partitionnement doit être vérifié par des outils qualifiés et ce pour tous les acteurs en jeu, ce qui augmente la complexité du processus.

Il est connu du document US 2009/0070769 A un système de traitement comprenant une ressource accessible par un processeur et un logiciel de partitionnement des ressources exécutable par le processeur.

Il existe donc un besoin pour un procédé de vérification d'une configuration de partitionnement de ressources d'un système avionique entre des éléments consommateurs de ressources dudit système qui soit plus simple à mettre en oeuvre.

A cet effet, l'invention a pour objet un procédé de vérification d'une configuration de partitionnement, entre une pluralité d'éléments consommateurs, d'au moins une ressource d'un module électronique d'un système avionique, selon la revendication indépendante 1.

Suivant des modes de mise en oeuvre particuliers, le procédé comprend une ou plusieurs caractéristiques selon les revendications dépendantes 2-5.

L'invention concerne, également, un programme d'ordinateur comportant des instructions logicielles qui, lorsqu'elles sont exécutées par un ordinateur, mettent en oeuvre un procédé tel que décrit précédemment.

L'invention concerne, en outre, un dispositif de vérification d'une configuration de partitionnement, selon la revendication indépendante 7.

D'autres caractéristiques et avantages de l'invention apparaîtront à la lecture de la description qui suit de modes de réalisation de l'invention, donnée à titre d'exemple uniquement, et en référence aux dessins qui sont :
- figure 1, une représentation schématique d'un système avionique selon un premier mode de réalisation de l'invention, et
- figure 2, une représentation schématique d'un système avionique selon un deuxième mode de réalisation de l'invention.

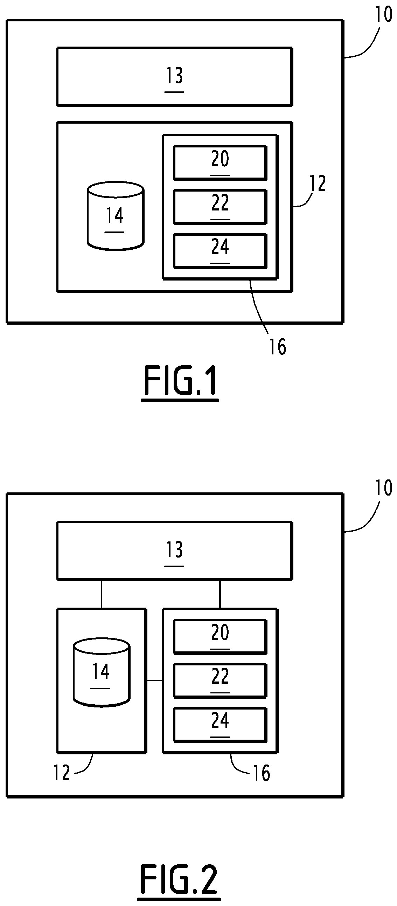

Un système avionique 10 est illustré sur les figures 1 et 2.

Selon un premier mode de réalisation, le système avionique 10 comprend des éléments 13 consommateurs de ressource(s) 14, un module 12 et un dispositif électronique 16 de vérification d'une configuration de partitionnement.

Dans la suite de la description, chaque élément 13 consommateur de ressource(s) 14 est également appelé application, et le terme application est alors analogue au terme élément consommateur de ressource(s) au sens de l'invention.

Les éléments consommateurs 13 sont, par exemple, des fonctions du système avionique 10 dont une partie est installée sur des architectures IMA. Les éléments consommateurs 13 sont, par exemple, des programmes informatiques utilisateurs de ressources 14, des éléments physiques, également appelés éléments matériels, (hardware) utilisateurs des ressources 14, ou encore des tables de configuration décrivant, ou définissant, l'usage des ressources 14 (typique d'une ressource entrée/sortie). Plus particulièrement, les éléments consommateurs 13 sont, par exemple, des programmes de gestion du vol ou de commande du système de freinage du système avionique 10.

Les éléments consommateurs 13 sont susceptibles d'être distants du module 12 hébergeant les ressources 14 considérées (par exemple, lorsque la ressource 14 est un routeur du réseau avionique).

Chaque élément 13 présente des contraintes de fonctionnement. Les contraintes de fonctionnement définissent des interactions entre les éléments consommateurs 13. Par exemple, les contraintes de fonctionnement interdisent les interactions entre certains éléments consommateurs 13 et autorisent des interactions entre des éléments 13 spécifiques.

De telles contraintes fonctionnelles se traduisent par le regroupement d'éléments consommateurs 13 dans des partitions. Les éléments consommateurs 13 de partitions différentes sont indépendants entre eux. Les éléments consommateurs 13 d'une même partition n'ont pas de contrainte d'indépendance entre eux.

A titre d'illustration, le module 12 est, par exemple, l'un des éléments suivants ou une combinaison de plusieurs des éléments suivants :
- un module de calcul comprenant un processeur associé à une mémoire permettant d'exécuter des logiciels applicatifs,
- un module d'acquisition d'entrées/sorties permettant d'échantillonner et de convertir des formats de données, ainsi que d'émettre lesdites données sur un réseau avionique pour des applications locales ou distantes,
- un réseau avionique constitué de routeurs,
- un module d'affichage constitué de processeurs, dont au moins un processeur graphique et, d'un écran, ou
- un module de stockage de données permettant le partage de données entre plusieurs applications locales ou distantes.

Dans le mode de réalisation illustré par la figure 1, le module 12 comprend une pluralité de ressources 14 et un dispositif électronique 16 de vérification d'une configuration de partitionnement des ressources 14 du module 12 entre les éléments consommateurs 13.

En complément facultatif, le module 12 comprend en outre :
- des entrées et des sorties (par exemple discrètes, analogiques, des bus aéronautiques ARINC 429 ou encore des bus CAN), et/ou
- une connexion à un réseau avionique conforme, par exemple, à la norme ARINC 664, et/ou
- un dispositif d'acquisition permettant d'échantillonner et d'extraire des données, de convertir lesdites données dans un format adéquat et de former à partir desdites données des messages destinés à être émis sur un réseau avionique, un tel dispositif d'acquisition étant généralement configurable pour être adaptable aux divers besoins de systèmes embarqués sur un avion.

Les ressources 14 du module 12 sont des éléments physiques ou logiques propres à être mis à disposition d'éléments consommateurs 13 de ressources locaux, c'est-à-dire d'éléments appartenant au module 12, ou d'éléments consommateurs 13 de ressources distants, c'est-à-dire d'éléments n'appartenant pas au module 12 et susceptibles d'être positionnés à distance du module 12.

Les ressources 14 sont, par exemple, réparties en catégories de ressources qui sont :
- les ressources de type traitement de données (en anglais « processing »). De telles ressources sont, par exemple, la puissance de calcul d'un processeur ou la capacité de stockage d'une mémoire.
- les ressources de type entrées et sorties.
- les ressources spécifiques au réseau avionique. De telles ressources sont, par exemple, les routeurs de communication d'un réseau ARINC664.
- les ressources de type graphique, c'est-à-dire les ressources permettant un affichage. Un écran est un exemple de telles ressources.
- les ressources de type mémoire de masse (en anglais « mass memory »).

De manière générale, les catégories séparent les ressources selon leur destination.

Les ressources 14 de telles catégories de ressources sont aussi susceptibles d'être distinguées dans les sous-catégories (non exhaustives) suivantes :
- une sous-catégorie pour les différents types de mémoire (RAM, ROM, NVM, ...).
- une sous-catégorie pour les supports de stockage (disques).
- une sous-catégorie pour les processeurs de calcul.
- une sous-catégorie pour les processeurs graphiques.
- une sous-catégorie pour les différents types d'entrée/sorties (discrets, analogiques, bus ARINC 429, CAN).
- une sous-catégorie pour les points d'accès aux réseaux avionique (ARINC A664).
- une sous-catégorie pour les routeurs de réseau avioniques.
- une sous-catégorie pour les écrans pour l'affichage des informations avioniques.

De manière générale, les sous-catégories séparent les ressources 14 selon leur nature.

Chaque ressource 14 présente une capacité. La capacité de chaque ressource 14 caractérise la taille de ladite ressource 14.

Pour une ressource 14 de type entrée-sortie, la capacité de ladite ressource 14 est quantifiable par le nombre d'entrées et de sorties différentes de ladite ressource 14 (par exemple, le nombre d'entrées discrètes, analogiques, de bus ARINC 429, etc.).

Pour une ressource 14 de type traitement de données, la capacité de ladite ressource 14 est quantifiable par la puissance de calcul du processeur de ladite ressource 14 et/ou le volume de stockage de la mémoire de ladite ressource 14.

Chaque ressource 14 est découpable en segments de ressource. Chaque segment de ressource présente une capacité unitaire. Chaque segment de ressource est indépendant des autres segments de ressources.

Par exemple, si l'on suppose que la ressource 14 est une mémoire, les segments de ressource sont des fragments de mémoire identifiés, par exemple, par une adresse et une taille.

Dans le mode de réalisation illustré par la figure 1, donné à titre d'exemple, le dispositif de vérification 16 comprend un processeur 20, une mémoire 22 et un lecteur 24 de support d'informations.

En complément facultatif, dans la mesure où le dispositif 16 est un composant du module 12, le processeur 20, la mémoire 22 et le lecteur 24 de support d'informations du dispositif de vérification 16 sont susceptibles d'être partagés avec d'autres composants du module 12.

Dans le premier mode de réalisation illustré par la figure 1, le dispositif de vérification 16 est, avantageusement, embarqué dans le module 12.

Le dispositif de vérification 16 est destiné à interagir avec un produit programme d'ordinateur comportant un support lisible d'informations lisible par le lecteur 24 du module 12.

Le support lisible d'informations du produit programme d'ordinateur est, par exemple, un médium adapté à mémoriser des instructions électroniques et capable d'être couplé à un bus d'un système informatique. A titre d'exemple, le support lisible d'informations est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique.

Sur le support lisible d'informations est mémorisé un programme d'ordinateur comprenant des instructions de programme.

Le programme d'ordinateur est chargeable sur le processeur 20 et est adapté pour entraîner la mise en oeuvre d'un procédé de vérification d'une configuration de partitionnement, entre une pluralité d'éléments consommateurs 13, d'au moins une ressource 14 d'un module électronique 12 d'un système avionique 10 comme cela sera décrit dans la suite de la description.

En variante, le dispositif de vérification est de type hardware (traduit en français par *matériel*), tel qu'un circuit logique programmable (abrégé par FPGA ce qui signifie en anglais *Field Programmable Gate Array*), ou encore un circuit intégré dédié, tel qu'un ASIC (de l'anglais *Application-Specific Integrated Circuit*).

Un procédé de vérification d'une configuration de partitionnement, entre une pluralité d'éléments consommateurs 13, d'au moins une ressource 14 d'un module électronique 12 d'un système avionique 10 va maintenant être décrit.

La configuration de partitionnement correspond, pour chaque ressource 14, à :
- un découpage de la ressource 14 en un ou plusieurs segments de ressource,
- une allocation d'au moins un segment de ressource à un ou plusieurs éléments consommateurs 13, et
- une utilisation, par chaque élément consommateur 13, d'au moins un segment de ressource alloué.

Par exemple, lorsque l'une des ressources 14 est un bus de communication, la capacité de ladite ressource 14 est le nombre de messages apte à être transmis par unité de temps via le bus de communication. Chaque segment de ressource est un ensemble de messages apte à être transmis par unité de temps. L'allocation est l'allocation d'un nombre de messages apte à être transmis par unité de temps. L'utilisation de segments de ressource par un élément consommateur 13 est le nombre de messages utilisés par unité de temps par ledit élément consommateur 13, ainsi que les éléments de configuration liés au traitement desdits messages.

Dans un autre exemple, lorsqu'au moins l'une des ressources 14 est une mémoire, la capacité de ladite ressource 14 est la taille de la mémoire. Chaque segment de ressource est une portion de mémoire. L'utilisation comporte la définition d'un ensemble de données autorisé à être mémorisé dans la portion de mémoire.

Le procédé de vérification comprend tout d'abord une étape 100 de vérification du respect d'un ensemble de règles de partitionnement.

L'ensemble de règles de partitionnement comporte au moins les règles suivantes :
- une première règle selon laquelle la somme des capacités unitaires des segments de ressource alloués pour chaque ressource 14 est inférieure ou égale à la capacité de ladite ressource 14.
- une deuxième règle selon laquelle seuls des segments de ressource définis préalablement sont allouables à des éléments consommateurs 13 distincts, sauf en cas de partage autorisé. L'allocation de segments de ressource est donc cohérent entre les différents éléments consommateurs 13.
- une troisième règle selon laquelle l'utilisation de segments de ressource par un élément consommateur 13 est limité aux segments de ressource alloués audit élément consommateur 13.
la configuration de partitionnement étant considérée valide lorsque l'ensemble de règles de partitionnement est respecté.

L'étape de vérification 100 est réalisée par lancement du module 12 avec la configuration de partitionnement. Le lancement du module est équivalent à une phase d'initialisation du module 12.

La configuration de partitionnement est considérée valide lorsque le module 12 démarre avec la configuration de partitionnement.

La configuration de partitionnement est considérée invalide lorsque le module 12 ne démarre pas avec la configuration de partitionnement.

Par exemple, pour chaque ressource 14 continue, la capacité est exprimée sous la forme d'un espace alloué défini par un indicateur de début et un indicateur de fin. L'allocation de segments de ressource est exprimée sous la forme de sous-espaces alloués chacun défini par un indicateur de début et un indicateur de fin. Les sous-espaces alloués sont rangés dans une table de configuration par ordre croissant de l'indicateur de début desdits sous-espaces alloués. Dans cet exemple, la configuration de partitionnement est considérée invalide lorsqu'au moins l'une des conditions suivantes est réalisée :
- l'indicateur de début ou l'indicateur de fin d'un sous-espace alloué est compris entre l'indicateur de début et l'indicateur de fin d'un autre sous-espace alloué dans la table de configuration,
- l'indicateur de début ou l'indicateur de fin d'un sous-espace alloué de la table de configuration n'est pas compris au sens large entre l'indicateur de début et l'indicateur de fin de l'espace alloué.

En variante de cet exemple, la capacité est définie seulement sous la forme d'un indicateur de début et d'une taille. La taille est, par exemple, une taille d'une mémoire en octets, une bande passante d'un canal de communication en mégabits par seconde, un nombre d'interfaces d'entrée et de sortie disponibles, une durée ou encore un offset temporel.

Dans un autre exemple, pour des ressources 14 discrètes, les segments de ressource sont listés dans une table de configuration. L'allocation de segments de ressource associe les segments de ressource listés à des éléments consommateurs 13. La configuration de partitionnement est considérée invalide lorsqu'au moins l'une des conditions suivantes est réalisée :
- un segment de ressource listé est associé à plus d'un élément consommateur alors que ledit segment de ressource ne fait pas partie des segments de ressource allouables à des éléments consommateurs 13 distincts, et
- un élément consommateur est associé à un segment de ressource ne figurant pas dans la liste.

Puis, lorsque la configuration de partitionnement est considérée valide à l'issue de l'étape de vérification 100, le procédé de vérification comprend une étape d'exploitation 110 du module 12 avec ladite configuration de partitionnement.

La vérification du respect de l'ensemble de règles de partitionnement est mise en oeuvre uniquement avant l'exploitation du module 12.

Lorsque la configuration de partitionnement est considérée invalide, le procédé comprend la répétition de l'étape de vérification 100 sur des parties, prises individuellement, de la configuration de partitionnement. Une partie d'une configuration de partitionnement est, par exemple, une partie de l'allocation de ladite configuration de partitionnement, c'est-à-dire seuls certains des segments de ressource alloués de la configuration de partitionnement.

Une partie de la configuration de partitionnement est considérée valide lorsque le module 12 démarre avec ladite partie de la configuration de partitionnement. Une partie de la configuration de partitionnement est considérée invalide lorsque le module 12 ne démarre pas avec ladite partie de la configuration de partitionnement.

Ainsi, un tel procédé de vérification est plus simple à mettre en oeuvre qu'un procédé de certification incrémentale de l'état de la technique pour lequel des outils de vérification complexes sont mis en oeuvre pour vérifier le respect du partitionnement au cours du processus de configuration du module 12.

Avec le procédé proposé, il n'y a plus besoin de règles extérieure à vérifier à partir du moment où le module 12 est en fonctionnement avec la configuration de partitionnement valide vérifiée par le module lui-même. Il n'y a donc plus nécessité de vérification préalable d'un domaine d'usage de partitionnement pour la qualification puisqu'un partitionnement valide obtenu à l'issue du procédé de vérification décrit précédemment assure intrinsèquement que le partitionnement est respecté.

Un tel procédé est, en outre, applicable à tout type de ressources 14.

Un tel procédé laisse également plus de possibilités dans la conception du partitionnement par rapport aux procédés de l'état de la technique.

Un tel procédé présente également une meilleure résistance aux agressions extérieures. En effet, pour aboutir à une défaillance du partitionnement par une action extérieure au module 12, un tiers devra agir sur plusieurs éléments de manière cohérente qui sont le découpage des ressources 14 en segments et l'attribution des segments de ressources, et ce de manière cohérente afin de passer au travers des mécanismes du partitionnement. Une altération d'un élément de manière non cohérente sera interceptée lors de l'étape de vérification 100 et ne générera pas de comportement erroné non détecté. Le procédé permet donc d'adapter le partitionnement du module 12 de manière autonome et en temps réel.

Selon un deuxième mode de réalisation tel que visible sur la figure 2, le dispositif de vérification 16 du deuxième mode de réalisation est distinct du module 12 et n'est pas embarqué dans le module 12. Le dispositif de vérification 16 est alors l'un des composants du système avionique 10 ou même un élément hors du système avionique 10 (typiquement un outil de génération de la configuration) et non plus un composant du module 12. Hormis, un tel changement, le deuxième mode de réalisation est identique au premier mode de réalisation.

Le procédé de vérification mis en oeuvre par le dispositif de vérification 16 est identique à celui décrit pour le premier mode de réalisation à la différence que l'étape de vérification 100 est réalisée au sein du dispositif de vérification 16, et non pas par lancement du module 12, dans un mode de réalisation non inclus dans l'objet des revendications.

L'étape de vérification 100 consiste alors à vérifier la validité de la configuration de partitionnement proposée et ce uniquement avant l'étape d'exploitation 110 du module. Dans le cas où le partitionnement proposé n'est pas validé, la configuration n'est pas générée ni transmise au module, et celui-ci ne peut donc pas atteindre l'étape d'exploitation 110.

Puis, seul un partitionnement considéré comme valide est implémenté sur le module 12 et l'étape d'exploitation 110 est identique à celle du premier mode de réalisation.

Outre les avantages du premier mode de fonctionnement, un tel deuxième mode de fonctionnement présente l'avantage de déterminer un partitionnement à partir d'un outil (le dispositif de vérification 16) distinct du module 12, ce qui allège la conception du module 12. Un tel deuxième mode de fonctionnement permet ainsi d'atteindre un niveau de partitionnement intrinsèque sans changer en totalité la conception du module 12.

Selon une variante du procédé de vérification, au moins une règle de l'ensemble de règles est vérifiée avant l'exploitation du module avec la configuration de partitionnement, ladite règle étant de préférence la première règle et/ou la deuxième règle. Les autres règles sont alors susceptibles d'être vérifiées après ladite exploitation du module, correspondant au démarrage du module.

Par exemple, les première et deuxième règles (relatives aux allocations) sont vérifiées avant l'exploitation du module, et la troisième règle (relative à l'utilisation) est vérifiée seulement lors de l'initialisation des applications, ou même en phase opérationnelle avant usage par l'application des ressources allouées à cette application.

L'homme du métier comprendra qu'une telle variante est à interpréter avec les éléments compatibles du premier et du deuxième mode de mise en oeuvre du procédé de vérification qui ont été décrits précédemment.

## Revendications

1. Procédé de vérification d'une configuration de partitionnement, entre une pluralité d'éléments consommateurs (13), d'au moins une ressource (14) d'un module électronique (12) d'un système avionique (10), chaque ressource (14) ayant une capacité et étant découpable en segments, la configuration de partitionnement correspondant, pour chaque ressource (14), à :
• un découpage de la ressource (14) en un ou plusieurs segments de ressource, chaque segment ayant une capacité unitaire,
• une allocation d'au moins un segment de ressource à un ou plusieurs éléments consommateurs (13),
• une utilisation, par chaque élément consommateur (13), d'au moins un segment de ressource alloué,
le système avionique (10) comprenant un dispositif électronique de vérification (16), le procédé étant mis en oeuvre par le dispositif électronique de vérification (16) et comprenant :
- la vérification du respect d'un ensemble de règles de partitionnement, l'ensemble de règles de partitionnement comportant au moins les règles suivantes :
• une première règle selon laquelle la somme des capacités unitaires des segments de ressource alloués pour chaque ressource (14) est inférieure ou égale à la capacité de ladite ressource (14),
• une deuxième règle selon laquelle seuls des segments de ressource définis préalablement sont allouables à des éléments consommateurs (13) distincts,
• une troisième règle selon laquelle l'utilisation de segments de ressource par un élément consommateur (13) est limitée aux segments de ressource alloués audit élément consommateur (13),
la configuration de partitionnement étant considérée valide lorsque l'ensemble des règles de partitionnement est respecté,
la vérification comportant le lancement du module (12) avec la configuration de partitionnement,
la configuration de partitionnement étant considérée valide lorsque le module (12) démarre avec la configuration de partitionnement, et
la configuration de partitionnement étant considérée invalide lorsque le module (12) ne démarre pas avec la configuration de partitionnement,
- lorsque la configuration de partitionnement est considérée valide à l'issue de la vérification, l'exploitation du module (12) avec la configuration de partitionnement.

2. Procédé selon la revendication 1, dans lequel lorsque la configuration de partitionnement est considérée invalide, le procédé comprend la répétition de la vérification sur des parties, prises individuellement, de la configuration de partitionnement,
une partie de la configuration de partitionnement étant considérée valide lorsque le module (12) démarre avec ladite partie de la configuration de partitionnement, et
une partie de la configuration de partitionnement étant considérée invalide lorsque le module (12) ne démarre pas avec ladite partie de la configuration de partitionnement.

3. Procédé selon la revendication 1 ou 2, dans lequel le module électronique (12) comprend le dispositif électronique de vérification (16).

4. Procédé selon l'une quelconque des revendications 1 à 3, dans lequel, pour chaque ressource (14) continue, la capacité est exprimée sous la forme d'un espace alloué défini par un indicateur de début et un indicateur de fin, l'allocation de segments de ressource étant exprimée sous la forme de sous-espaces alloués chacun défini par un indicateur de début et un indicateur de fin, les sous-espaces alloués étant rangés dans une table de configuration par ordre croissant de l'indicateur de début desdits sous-espaces alloués, la configuration de partitionnement étant considérée invalide lorsqu'au moins l'une des conditions suivantes est réalisée :
- l'indicateur de début ou l'indicateur de fin d'un sous-espace alloué est compris entre l'indicateur de début et l'indicateur de fin d'un autre sous-espace alloué dans la table de configuration,
- l'indicateur de début ou l'indicateur de fin d'un sous-espace alloué de la table de configuration n'est pas compris au sens large entre l'indicateur de début et l'indicateur de fin de l'espace alloué.

5. Procédé selon l'une quelconque des revendications 1 à 4, dans lequel pour les ressources (14) discrètes les segments de ressource sont listés dans une table de configuration, l'allocation de segments de ressource associant les segments de ressource listés à des éléments consommateurs (13), la configuration de partitionnement étant considérée invalide lorsqu'au moins l'une des conditions suivantes est réalisée :
- un segment de ressource listé est associé à plus d'un élément consommateur (13) alors que ledit segment de ressource ne fait pas partie des segments de ressource allouables à des éléments consommateurs (13) distincts, et
- un élément consommateur (13) est associé à un segment de ressource ne figurant pas dans la liste.

6. Programme d'ordinateur comportant des instructions logicielles qui, lorsqu'elles sont exécutées par un ordinateur, mettent en oeuvre un procédé selon l'une quelconque des revendications 1 à 5.

7. Dispositif électronique (16) de vérification d'une configuration de partitionnement, entre une pluralité d'éléments consommateurs (13), d'au moins une ressource (14) d'un module électronique (12) d'un système avionique (10), chaque ressource (14) ayant une capacité et étant découpable en segments, la configuration de partitionnement correspondant, pour chaque ressource (14), à :
• un découpage de la ressource (14) en un ou plusieurs segments de ressource, chaque segment ayant une capacité unitaire,
• une allocation d'au moins un segment de ressource à un ou plusieurs éléments consommateurs (13),
• une utilisation, par chaque élément consommateur (13), d'au moins un segment de ressource alloué,
le dispositif électronique de vérification (16) comprenant :
- un module de vérification du respect d'un ensemble de règles de partitionnement, l'ensemble de règles de partitionnement comportant au moins les règles suivantes :
• une première règle selon laquelle la somme des capacités unitaires des segments de ressource alloués pour chaque ressource (14) est inférieure ou égale à la capacité de ladite ressource (14),
• une deuxième règle selon laquelle seuls des segments de ressource définis préalablement sont allouables à des éléments consommateurs (13) distincts,
• une troisième règle selon laquelle l'utilisation de segments de ressource par un élément consommateur (13) est limité aux segments de ressource alloués audit élément consommateur (13),
la configuration de partitionnement étant considérée valide lorsque l'ensemble des règles de partitionnement est respecté,
le module de vérification étant propre à lancer le module (12) avec la configuration de partitionnement,
la configuration de partitionnement étant considérée valide lorsque le module (12) démarre avec la configuration de partitionnement, et
la configuration de partitionnement étant considérée invalide lorsque le module (12) ne démarre pas avec la configuration de partitionnement,
- un module d'exploitation du module (12) avec ladite configuration de partitionnement lorsque ladite configuration de partitionnement est considérée valide à l'issue de la vérification.

## Patentansprüche

1. Verfahren zur Überprüfung einer Partitionierungskonfiguration unter einer Vielzahl von Verbraucherelementen (13) von mindestens einer Ressource (14) eines elektronischen Moduls (12) eines Avioniksystems (10), wobei jede Ressource (14) eine Kapazität aufweist und in Segmente aufteilbar ist, wobei die Partitionierungskonfiguration für jede Ressource (14) Folgendem entspricht:
• ein Aufteilen der Ressource (14) in ein oder mehrere Ressourcensegmente, wobei jedes Segment eine Einheitskapazität aufweist,
• eine Zuweisung von mindestens einem Ressourcensegment an ein oder mehrere Verbraucherelemente (13),
• eine Verwendung, durch jedes Verbraucherelement (13), von mindestens einem zugewiesenen Ressourcensegment,
das Avioniksystem (10) umfassend eine elektronische Überprüfungsvorrichtung (16), wobei das Verfahren durch die elektronische Überprüfungsvorrichtung (16) implementiert wird und Folgendes umfasst:
- die Überprüfung der Einhaltung eines Satzes von Partitionierungsregeln, der Satz von Partitionierungsregeln umfassend mindestens die folgenden Regeln:
• eine erste Regel, laut der die Summe der Einheitskapazitäten der Ressourcensegmente, die für jede Ressource (14) zugewiesen wurden, kleiner als oder gleich wie die Kapazität der Ressource (14) ist,
• eine zweite Regel, laut der nur zuvor definierte Ressourcensegmente separaten Verbraucherelementen (13) zugewiesen werden können,
• eine dritte Regel, laut der die Nutzung von Ressourcensegmenten durch ein Verbraucherelement (13) auf die Ressourcensegmente beschränkt ist, die dem genannten Verbraucherelement (13) zugewiesen sind,
wobei die Partitionierungskonfiguration als gültig betrachtet wird, wenn alle Partitionierungsregeln eingehalten werden,
die Überprüfung umfassend das Starten des Moduls (12) mit der Partitionierungskonfiguration,
wobei die Partitionierungskonfiguration als gültig betrachtet wird, wenn das Modul (12) mit der Partitionierungskonfiguration startet, und
wobei die Partitionierungskonfiguration als ungültig betrachtet wird, wenn das Modul (12) mit der Partitionierungskonfiguration nicht startet,
- wenn die Partitionierungskonfiguration nach der Überprüfung als gültig betrachtet wird, den Betrieb des Moduls (12) mit der Partitionierungskonfiguration.

2. Verfahren nach Anspruch 1, wobei, wenn die Partitionierungskonfiguration als ungültig betrachtet wird, das Verfahren das Wiederholen der Überprüfung an einzeln genommenen Teilen der Partitionierungskonfiguration umfasst,
ein Teil der Partitionierungskonfiguration als gültig betrachtet wird, wenn das Modul (12) mit diesem Teil der Partitionierungskonfiguration startet, und
ein Teil der Partitionierungskonfiguration als ungültig betrachtet wird, wenn das Modul (12) mit diesem Teil der Partitionierungskonfiguration nicht startet.

3. Verfahren nach Anspruch 1 oder 2, wobei das elektronische Modul (12) die elektronische Überprüfungsvorrichtung (16) umfasst.

4. Verfahren nach einem der Ansprüche 1 bis 3, wobei für jede kontinuierliche Ressource (14) die Kapazität in Form eines zugewiesenen Raums ausgedrückt wird, der durch einen Anfangsindikator und einen Endindikator definiert ist, wobei die Zuweisung von Ressourcensegmenten in Form von zugewiesenen Unterräumen ausgedrückt wird, die jeweils durch einen Anfangsindikator und einen Endindikator definiert sind, wobei die zugewiesenen Unterräume in einer Konfigurationstabelle in aufsteigender Reihenfolge des Startindikators der zugewiesenen Unterräume angeordnet werden, wobei die Partitionierungskonfiguration als ungültig betrachtet wird, wenn mindestens eine der folgenden Bedingungen erfüllt ist:
- der Startindikator oder der Endindikator eines zugewiesenen Unterraums liegt zwischen dem Startindikator und dem Endindikator eines anderen zugewiesenen Unterraums in der Konfigurationstabelle,
- der Startindikator oder der Endindikator eines zugewiesenen Unterbereichs der Konfigurationstabelle liegt im weitesten Sinne nicht zwischen dem Startindikator und der Endindikator des zugewiesenen Bereichs.

5. Verfahren nach einem der Ansprüche 1 bis 4, wobei für separate Ressourcen (14) die Ressourcensegmente in einer Konfigurationstabelle aufgelistet werden, wobei die Zuweisung von Ressourcensegmenten die aufgelisteten Ressourcensegmente mit Verbraucherelementen (13) assoziiert, wobei die Partitionierungskonfiguration als ungültig betrachtet wird, wenn mindestens eine der folgenden Bedingungen erfüllt ist:
- ein aufgelistetes Ressourcensegment ist mit mehr als einem Verbraucherelement (13) assoziiert, während das Ressourcensegment nicht Teil der Ressourcensegmente ist, die verschiedenen Verbraucherelementen (13) zugewiesen werden können, und
- ein Verbraucherelement (13) ist mit einem Ressourcensegment assoziiert, das nicht in der Liste aufgeführt wird.

6. Computerprogramm, umfassend Softwareanweisungen, die, wenn sie von einem Computer ausgeführt werden, ein Verfahren nach einem der Ansprüche 1 bis 5 implementieren.

7. Elektronische Vorrichtung (16) zur Überprüfung einer Partitionierungskonfiguration unter einer Vielzahl von Verbraucherelementen (13) von mindestens einer Ressource (14) eines elektronischen Moduls (12) eines Avioniksystems (10), wobei jede Ressource (14) eine Kapazität aufweist und in Segmente aufteilbar ist, wobei die Partitionierungskonfiguration für jede Ressource (14) Folgendem entspricht:
• ein Aufteilen der Ressource (14) in ein oder mehrere Ressourcensegmente, wobei jedes Segment eine Einheitskapazität aufweist,
• eine Zuweisung von mindestens einem Ressourcensegment an ein oder mehrere Verbraucherelemente (13),
• eine Verwendung, durch jedes Verbraucherelement (13), von mindestens einem zugewiesenen Ressourcensegment,
die elektronische Überprüfungsvorrichtung (16) umfassend:
- ein Überprüfungsmodul der Einhaltung eines Satzes von Partitionierungsregeln, der Satz von Partitionierungsregeln umfassend mindestens die folgenden Regeln:
• eine erste Regel, laut der die Summe der Einheitskapazitäten der Ressourcensegmente, die für jede Ressource (14) zugewiesen wurden, kleiner als oder gleich wie die Kapazität der Ressource (14) ist,
• eine zweite Regel, laut der nur zuvor definierte Ressourcensegmente separaten Verbraucherelementen (13) zugewiesen werden können,
• eine dritte Regel, laut der die Nutzung von Ressourcensegmenten durch ein Verbraucherelement (13) auf die Ressourcensegmente beschränkt ist, die dem genannten Verbraucherelement (13) zugewiesen sind,
wobei die Partitionierungskonfiguration als gültig betrachtet wird, wenn alle Partitionierungsregeln eingehalten werden,
wobei das Überprüfungsmodul geeignet ist, um das Modul (12) mit der Partitionierungskonfiguration zu starten,
wobei die Partitionierungskonfiguration als gültig betrachtet wird, wenn das Modul (12) mit der Partitionierungskonfiguration startet, und
wobei die Partitionierungskonfiguration als ungültig betrachtet wird, wenn das Modul (12) mit der Partitionierungskonfiguration nicht startet,
- ein Betreibungsmodul des Moduls (12) mit der Partitionierungskonfiguration, wenn die Partitionierungskonfiguration nach der Überprüfung als gültig betrachtet wird.

## Claims

1. A method for verifying a partitioning configuration, between a plurality of consuming elements (13), of at least one resource (14) of an electronic module (12) of an avionics system (10), each resource (14) having a capacity and being divisible into segments, the partitioning configuration corresponding, for each resource (14), to:
• a division of the resource (14) into one or several resource segments, each segment having a unitary capacity,
• an allocation of at least one resource segment to one or several consuming elements (13), and
• a use, by each consuming element (13), of at least one allocated resource segment,
the avionics system (10) comprising electronic verification device (16), the method being implemented by the electronic verification device (16) and comprising:
- verifying the compliance with a set of partitioning rules, the set of partitioning rules including at least the following rules:
• a first rule according to which the sum of the unitary capacities of the resource segments allocated for each resource (14) is less than or equal to the capacity of said resource (14),
• a second rule according to which only the resource segments previously defined can be allocated to distinct consuming elements (13),
• a third rule according to which the use of resource segments by a consuming element (13) is limited to the resource segments allocated to said consuming element (13),
the partitioning configuration being considered valid when the set of partitioning rules is respected,
the verification comprises launching the module (12) with the partitioning configuration,
the partitioning configuration being considered valid when the module (12) starts up with the partitioning configuration, and
the partitioning configuration being considered invalid when the module (12) does not start up with the partitioning configuration,
- when the partitioning configuration is considered valid after the verification, exploiting the module (12) with the partitioning configuration.

2. The method according to claim 1, wherein when the partitioning configuration is considered invalid, the method comprises the repetition of the verification on the parts, taken individually, of the partitioning configuration,
a part of the partitioning configuration being considered valid when the module (12) starts up with said part of the partitioning configuration, and
a part of the partitioning configuration being considered invalid when the module (12) does not start up with said part of the partitioning configuration.

3. The method according to claim 1 or 2, wherein the electronic module (12) comprises the electronic verification device (16).

4. The method according to any one of claims 1 to 3, wherein, for each continuous resource (14), the capacity is expressed in the form of an allocated space defined by a start indicator and an end indicator, the allocation of resource segments being expressed in the form of allocated sub-spaces each defined by a start indicator and an end indicator, the allocated sub-spaces being stored in a configuration table by increasing order of the start indicator of said allocated sub-spaces, the partitioning configuration being considered invalid when at least one of the following conditions is met:
- the start indicator or the end indicator of an allocated sub-space is comprised between the start indicator and the end indicator of another allocated sub-space in the configuration table,
- the start indicator or the end indicator of an allocated sub-space of the configuration table is not comprised, broadly speaking, between the start indicator and the end indicator of the allocated space.

5. The method according to any one of claims 1 to 4, wherein for discrete resources (14), the resource segments are listed in a configuration table, the allocation of resource segments associating the listed resource segments with consuming elements (13), the partitioning configuration being considered invalid when at least one of the following conditions is met:
- a listed resource segment is associated with more than one consuming element (13) while said resource segment is not part of the resource segments able to be allocated to distinct consuming elements (13), and
- a consuming element (13) is associated with a resource segment not appearing in the list.

6. A computer program comprising software instructions which, when executed by a computer, carry out a method according to any one of claims 1 to 5.

7. An electronic device (16) for verifying a partitioning configuration, between a plurality of consuming elements (13), of at least one resource (14) of an electronic module (12) of an avionics system (10), each resource (14) having a capacity and being divisible into segments, the partitioning configuration corresponding, for each resource (14), to:
• a division of the resource (14) into one or several resource segments, each segment having a unitary capacity,
• an allocation of at least one resource segment to one or several consuming elements (13), and
• a use, by each consuming element (13), of at least one allocated resource segment,
the electronic verification device (16) comprising:
- a module for verifying the compliance with a set of partitioning rules, the set of partitioning rules including at least the following rules:
• a first rule according to which the sum of the unitary capacities of the resource segments allocated for each resource (14) is less than or equal to the capacity of said resource (14),
• a second rule according to which only the resource segments previously defined can be allocated to distinct consuming elements (13),
• a third rule according to which the use of resource segments by a consuming element (13) is limited to the resource segments allocated to said consuming element (13).
the partitioning configuration being considered valid when the set of partitioning rules is respected,
the verification module being able to launch the module (12) with the partitioning configuration,
the partitioning configuration being considered valid when the module (12) starts up with the partitioning configuration, and
the partitioning configuration being considered invalid when the module (12) does not start up with the partitioning configuration,
- a module for exploiting the module (12) with said partitioning configuration when the partitioning configuration is considered valid after the verification.
